# EUROPEAN PATENT APPLICATION

(11) **EP 4 644 820 A1**
(43) Date of publication of application: **05.11.2025**
(21) Application number: 23926474.0
(22) Date of filing: 26.12.2023
(51) Int. Cl.: F28F 21/08, A01G 9/20, F24T 10/10, F28D 1/053, F28D 21/00, F28F 1/02, F28F 19/00, F28F 19/02, F28F 19/04

(54) **HEAT EXCHANGER**

(30) Priority: 09.03.2023 JP 2023036693; 24.07.2023 JP 2023119928
(71) Applicant: KABUSHIKI KAISHA KOBE SEIKO SHO (KOBE STEEL, LTD.), Hyogo 651-8585 (JP)
(72) Inventor: UEMATSU, Koji, Kobe-shi, Hyogo 651-2271 (JP); SUGIMOTO, Akio, Kobe-shi, Hyogo 651-2271 (JP)
(74) Representative: TBK
(86) International application number: PCT/JP2023/046647
(87) International publication number: WO 2024/185270

(57) **Abstract**

A first heat exchanger (1) is provided with a heat exchanger body (11) that forms a first heat medium flow path (10) through which heat medium (M) flows. Similarly, a second heat exchanger (2) is provided with a heat exchanger body (21) that forms a second heat medium flow path (20) through which the heat medium (M) flows. The heat exchanger bodies (11, 21) are buried in the ground. The heat exchanger body (11) is configured from an aluminum-alloy extruded material. The heat exchanger body (21) is configured from an aluminum-alloy sheet metal material.

## Description

### TECHNICAL FIELD

The present disclosure relates to a heat exchanger.

### BACKGROUND ART

Patent Document 1 discloses an underground heat utilization system including a U-shaped pipe buried underground as a heat exchange device. Underground heat is collected while a fluid flows through the U-shaped pipe.

### PRIOR ART DOCUMENT

### PATENT DOCUMENT

Patent Document 1: JP-A-2014-163554

### SUMMARY OF THE INVENTION

### PROBLEMS TO BE SOLVED BY THE INVENTION

The U-shaped pipe is made of a synthetic resin such as polyethylene. There is room for improvement in heat exchange performance.

It is an object of the present disclosure to improve heat exchange performance of a heat exchanger buried underground.

### SOLUTIONS TO THE PROBLEMS

An aspect of the present disclosure provides a heat exchanger formed from a heat exchanger body buried underground to form a heating medium flow path through which a heating medium flows, the heat exchanger body including an extruded material or a sheet metal material made of an aluminum alloy.

According to the above configuration, the heat exchanger body is made of an aluminum alloy having excellent thermal conductivity. As compared with a heat exchanger made of a synthetic resin, heat exchange between the heating medium and underground heat is accelerated to improve heat exchange performance of the heat exchanger.

The heat exchanger body may be formed from the extruded material, and the heating medium flow path may include a hollow part of the extruded material.

The above configuration enables facilitating manufacturing of a long heat exchanger because the extruded material is easily lengthened. The above configuration reduces the number of bonded places in manufacturing of the heat exchanger body to enable reduction in number of man-hours for manufacturing the heat exchanger and burying it in the underground, so that a burden of construction management can be reduced.

The heat exchanger body may be formed from a plurality of sheet metal materials including a first sheet metal material and a second sheet metal material. The first sheet metal material may include a recess, and the second sheet metal material may be stacked on and bonded to the first sheet metal material while closing the recess. The heating medium flow path may include a hollow part formed by closing the recess with the second sheet metal material.

The above configuration enables providing a heat exchanger excellent in heat exchange performance only by stacking two sheet metal materials. The sheet metal materials can be easily lengthened, so that a long heat exchanger can be easily manufactured.

The hollow part may be further provided at its opening on one end side with a first header that closes the opening and at its opening on another end side with a second header that closes the opening.

The above configuration enables forming a sealed heating medium flow path by attaching the two headers to both ends of the heat exchanger body.

An inlet through which the heating medium flows into the heating medium flow path and an outlet through which the heating medium flows out from the heating medium flow path are further provided. The inlet may be provided in any one of the first header and the second header, and the outlet may be provided in any one of the first header and the second header.

The above configuration enables adding a structure for supplying and discharging the heating medium to and from the sealed heating medium flow path to the heat exchanger body only by attaching the two headers to both the ends of the heat exchanger body.

The heat exchanger body may form a flow path independently of the heating medium flow path, the flow path allowing a fluid other than the heating medium to flow through the flow path.

The above configuration enables a plurality of types of fluids to flow in the underground. For example, when the heat exchanger is buried in a culture medium in which a plant is cultivated, the heat exchanger enables a gas contributing to growth of the plant, such as carbon dioxide, to flow while using the heating medium for temperature control of the culture medium.

The heat exchanger body may be buried under the ground or in a culture medium in which a plant is cultivated.

The above configuration enables using stable underground heat, and facilitates management of temperature of the heating medium. Alternatively, temperature of the culture medium can be controlled to accelerate or assist growth of the plant.

A corrosion preventing structure for preventing corrosion of the heat exchanger body may be further provided.

The above configuration enables preventing corrosion of the heat exchanger body even when the heat exchanger body is made of an aluminum alloy or an electrolyte is contained in the underground. Thus, the heat exchanger is improved in service life.

The corrosion preventing structure may include a base metal material buried underground together with the heat exchanger body and made of a metal material with an electric potential lower than that of the aluminum alloy, and a cable electrically connecting the heat exchanger body to the base metal material.

The above configuration enables preventing corrosion of the heat exchanger body due to galvanic corrosion that occurs in the base metal material even when the electrolyte is contained in the ground.

The corrosion preventing structure may include a resin film coated on an outer surface of the heat exchanger body. The corrosion preventing structure may include an alumite film or a glass layer provided on the outer surface of the heat exchanger body.

The above configuration allows the heat exchanger body to be protected by the resin film, so that corrosion of the heat exchanger body can be prevented even when the electrolyte is contained in the underground. When the heat exchanger is buried in a culture medium in which a plant is cultivated, it is also assumed that diffusion of metal into the culture medium is not preferable for the plant. Even under such a situation, corrosion of the heat exchanger body can be prevented. The resin film is lower in thermal conductivity than the aluminum alloy serving as a base material, and thus is required to have a film thickness set to a minimum thickness capable of preventing corrosion, the resin film being desirable to have a film thickness of several µm to several tens µm. Besides the resin, a material having electrical insulation properties is applicable to the film to be used as corrosion preventing means, and alumite treatment or coating treatment using an inorganic matter such as glass is applicable as a corrosion preventing measure.

A header made of a resin material may be further provided at an end of the heat exchanger body.

The above configuration prevents the header made of a resin from corroding even when the electrolyte is contained in the underground, thus improving the heat exchanger in service life.

### EFFECTS OF THE INVENTION

The present disclosure enables improvement in heat exchange performance of a heat exchanger buried underground.

### BRIEF DESCRIPTION OF THE DRAWINGS

[Fig. 1] Fig. 1 shows a conceptual diagram illustrating a heat exchange system to which a heat exchanger according to an embodiment is applied.
[Fig. 2] Fig. 2 shows a perspective view of a first heat exchanger.
[Fig. 3] Fig. 3 shows an exploded perspective view of the first heat exchanger.
[Fig. 4] Fig. 4 shows a sectional view of the first heat exchanger.
[Fig. 5] Fig. 5 shows a sectional view of Fig. 4 taken along line V-V.
[Fig. 6A] Fig. 6A shows a diagram illustrating an example of installation of a heat exchanger under the ground.
[Fig. 6B] Fig. 6B shows a sectional view of Fig. 6A taken along line B-B.
[Fig. 7A] Fig. 7A shows a diagram illustrating another example of installation of a heat exchanger under the ground.
[Fig. 7B] Fig. 7B shows a sectional view of Fig. 7A taken along line B-B.
[Fig. 8] Fig. 8 shows a perspective view of a second heat exchanger.
[Fig. 9] Fig. 9 shows an exploded perspective view of the second heat exchanger.
[Fig. 10] Fig. 10 shows a sectional view of the second heat exchanger.
[Fig. 11] Fig. 11 shows a sectional view of Fig. 10 taken along line XI-XI.
[Fig. 12] Fig. 12 shows a flowchart illustrating a method for manufacturing the second heat exchanger.
[Fig. 13] Fig. 13 shows a conceptual diagram of a manufacturing apparatus of the second heat exchanger.
[Fig. 14] Fig. 14 shows a sectional view of a second heat exchanger according to a modification.

### DETAILED DESCRIPTION

Hereinafter, embodiments will be described with reference to the drawings. Identical or corresponding elements are denoted by the same reference numerals throughout the drawings, and detailed description thereof will not be duplicated.

### (Heat exchange system)

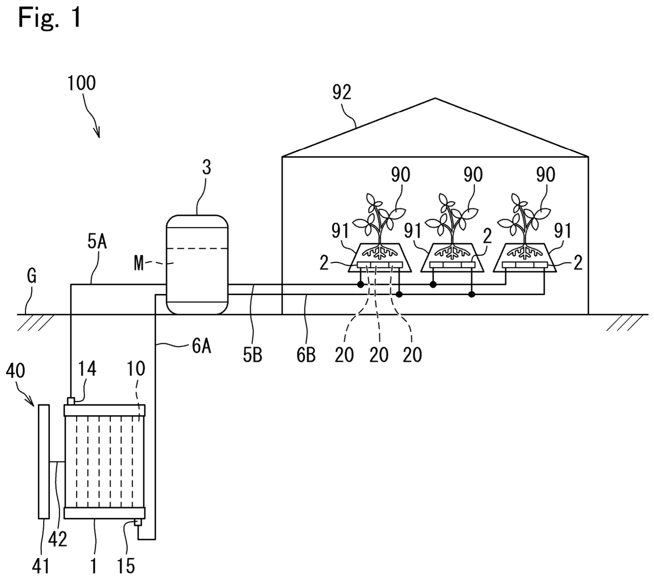

Fig. 1 illustrates a heat exchange system 100 to which heat exchangers (a first heat exchanger 1 and a second heat exchanger 2) according to an embodiment are applied. For example, the heat exchange system 100 adjusts temperature of a plant 90 and a culture medium 91 in which the plant 90 is planted, and assists growth of the plant 90. The plant 90 is preferably a crop. The culture medium 91 is a growth medium of the plant 90 and is one candidate for a buried destination of the heat exchanger. The culture medium 91 is soil forming a long ridge and has a section in a trapezoidal shape or a hill shape. The culture medium 91 is provided with a plurality of plants 90 disposed side by side at predetermined intervals in an extending direction of the culture medium 91 (a direction orthogonal to the paper surface of Fig. 1). The culture medium 91 is not particularly limited in number of rows.

For convenience of illustration, the culture medium 91 is positioned above a ground G. The ground G is a surface of the ground, and a part below the ground G is one candidate for the buried destination of the heat exchanger. The culture medium 91 may be installed on a shelf (not illustrated) supported on the ground G, or may be installed on the ground G. Although Fig. 1 illustrates an example in which the plant 90 is cultivated in an agricultural house 92, open-field cultivation may be performed.

The heat exchange system 100 includes the first heat exchanger 1, the second heat exchanger 2, a heat storage tank 3, a first supply line 5A, a second supply line 5B, a first discharge line 6A, and a second discharge line 6B.

Both the first heat exchanger 1 and the second heat exchanger 2 are buried underground. The "underground" includes a region under the ground G and a region in the culture medium 91 (especially, soil). The first heat exchanger 1 and the second heat exchanger 2 are each formed in a plate shape that is long, wide, and low in height.

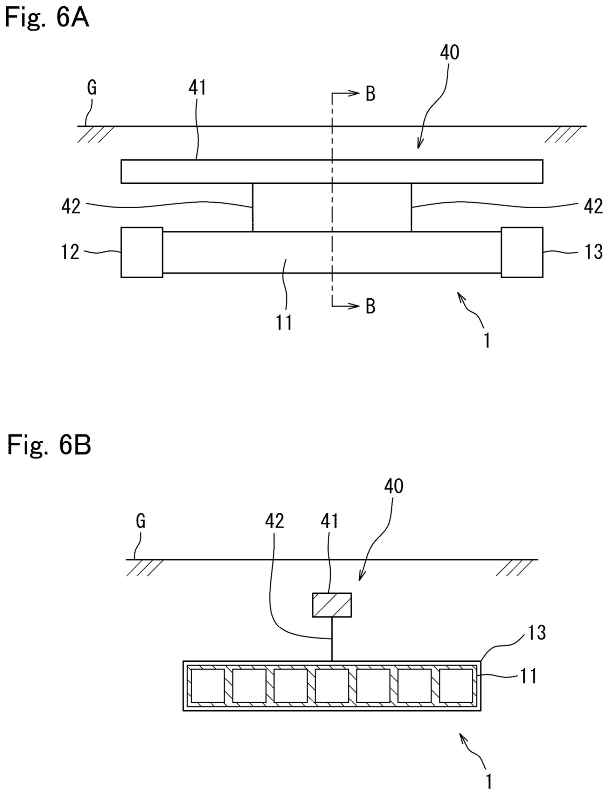

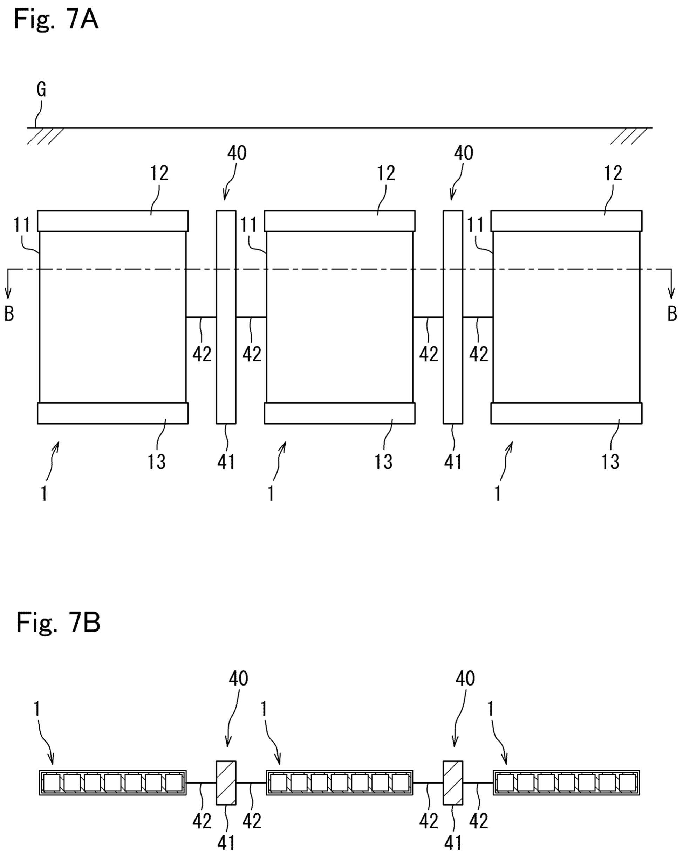

The first heat exchanger 1 is buried under the ground G. An installation depth is not particularly limited. A depth of more than 15 m causes a ground temperature to be stable regardless of a season or weather, and thus contributes to stable operation of the heat exchange system 100. The first heat exchanger 1 may have a longitudinal direction in a vertical direction (see Figs. 1 and 7A) or in a horizontal direction (see Fig. 6A) in the underground.

The second heat exchanger 2 is buried in the culture medium 91. A plurality of second heat exchangers 2 correspond to a plurality of rows of the culture medium 91 on a one-to-one basis. Each of the second heat exchangers 2 has a longitudinal direction in an extending direction of corresponding one of the rows of the culture medium 91.

The first heat exchanger 1 and the second heat exchanger 2 have a first heating medium flow path 10 and a second heating medium flow path 20 through which a heating medium M flows, respectively. The heating medium M is a liquid or gaseous fluid. For example, water and antifreeze are suitable as the heating medium M.

The heat storage tank 3 stores the heating medium M. The heat storage tank 3 has a heat insulating structure, and can manage temperature of the heating medium M in the heat storage tank 3 to a required temperature regardless of outside air temperature. The heat storage tank 3 is connected to an upstream end of the first heating medium flow path 10 using the first supply line 5A, and is connected to a downstream end of the first heating medium flow path 10 using the first discharge line 6A. The heat storage tank 3 is connected to an upstream end of the second heating medium flow path 20 using the second supply line 5B, and is connected to a downstream end of the second heating medium flow path 20 using the second discharge line 6B. The heat exchange system 100 is also provided with a pressurizing unit (not illustrated) for feeding the heating medium M.

The heating medium M in the heat storage tank 3 is fed to the second heat exchanger 2 through the second supply line 5B. The heating medium M exchanges heat with the culture medium 91 by solid heat transfer through a member (heat exchanger body 21) constituting the second heating medium flow path 20 in a step of flowing through the second heating medium flow path 20. After the heat exchange with the culture medium 91, the heating medium M returns to the heat storage tank 3 through the second discharge line 6B.

The heating medium M in the heat storage tank 3 is fed to the first heat exchanger 1 through the first supply line 5A. The heating medium M exchanges heat with underground heat by solid heat transfer through a member (heat exchanger body 11) constituting the first heating medium flow path 10 in a step of flowing through the first heating medium flow path 10. The underground heat is stable as described above, so that the temperature of the heating medium M can be adjusted to be equal to the underground temperature even when the temperature of the heating medium M changes due to heat exchange with the culture medium 91. After the heat exchange with the underground heat, the heating medium M returns to the heat storage tank 3 through the first discharge line 6A.

The heating medium M having a stable temperature due to heat exchange with the underground heat is supplied to the culture medium 91. In summer, cold water at a temperature lower than outside air temperature can be supplied to the culture medium 91. In winter, warm water at a temperature higher than outside air temperature can be supplied to the culture medium 91. Temperature of the culture medium 91, that is, temperature around a root of the plant 90, can be stabilized regardless of a season, and the growth of the plant 90 is accelerated.

The second supply line 5B includes a downstream part that is branched to supply the heating medium M to each of the plurality of second heat exchangers 2. The second supply line 5B includes an upstream part that is branched to discharge the heating medium M from each of the plurality of second heat exchangers 2.

### (First heat exchanger)

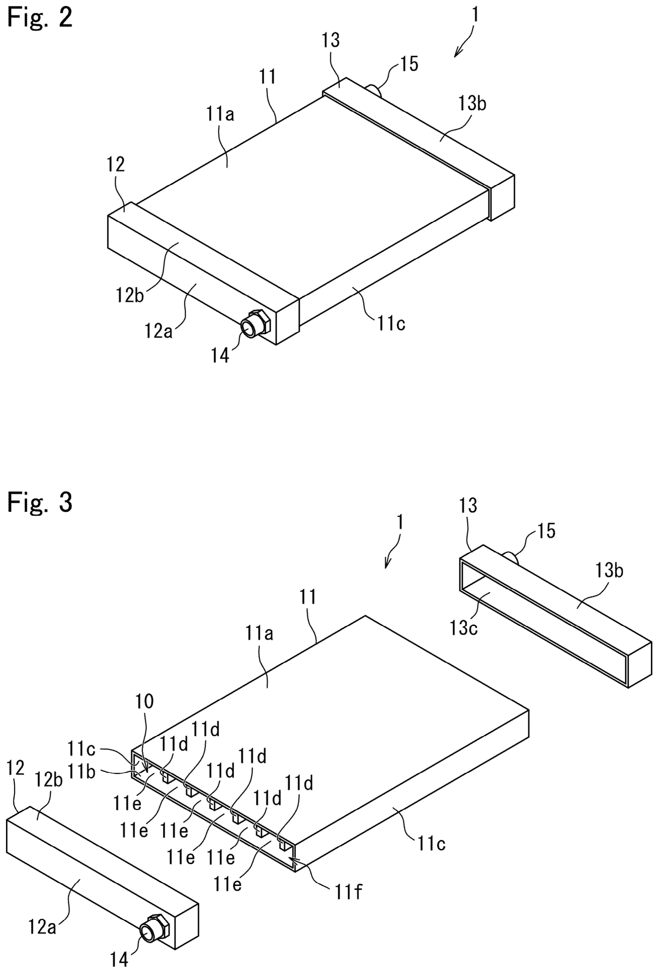

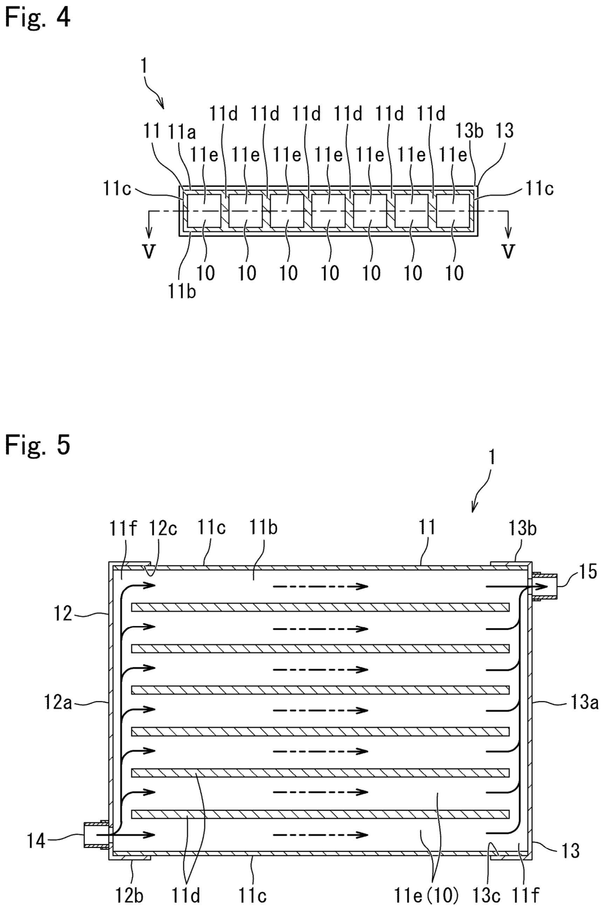

Next, the first heat exchanger 1 will be described with reference to Figs. 2 to 5. The first heat exchanger 1 includes the heat exchanger body 11, a first header 12, a second header 13, an inlet 14, and an outlet 15.

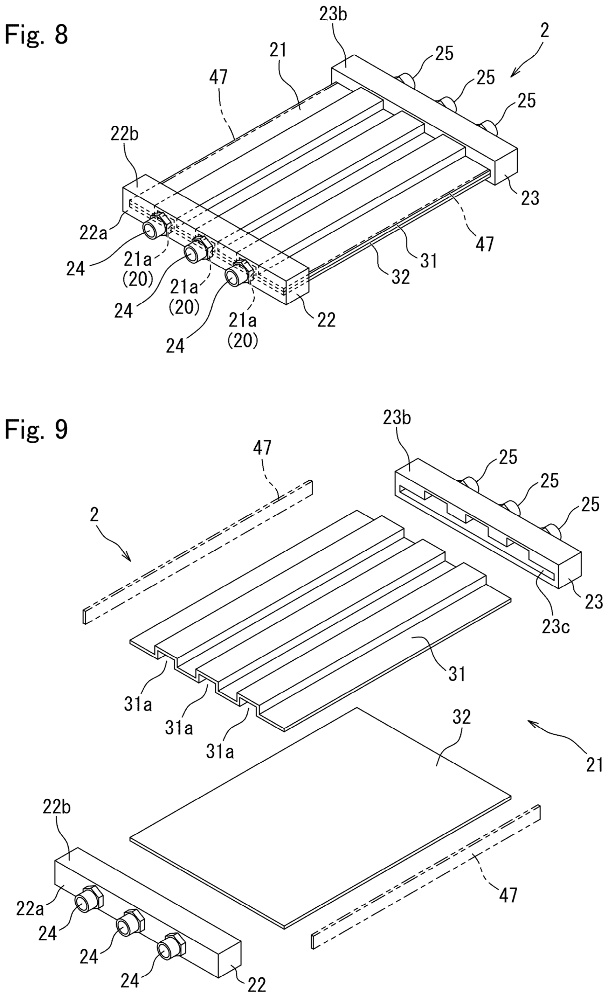

The heat exchanger body 11 includes an extruded material made of an aluminum alloy. Suitable examples of the aluminum alloy include 1000 series excellent in thermal conductivity, 2000 series excellent in strength, and 6000 series excellent in thermal conductivity and strength. The same applies to a material of the heat exchanger body 21 (see Fig. 8) of the second heat exchanger 2 described later.

The heat exchanger body 11 includes a first main wall 11a, a second main wall 11b, side walls 11c paired, a plurality of partition walls 11d, and a plurality of hollow parts 11e. The first main wall 11a, the second main wall 11b, and the side walls 11c paired form a rectangular tube that is long, wide, and low in height, and both ends of the rectangular tube in its longitudinal direction are open. This longitudinal direction is an extrusion direction.

In other words, the first main wall 11a is a flat plate in a rectangular shape. The side walls 11c paired are erected from respective side edges of the first main wall 11a. The second main wall 11b is a flat plate identical in shape to the first main wall 11a, is disposed parallel to the first main wall 11a to completely overlap the first main wall 11a when viewed in the plate thickness direction, and connects ends of the respective side walls 11c paired to each other. The four walls 11a to 11c define rectangular openings at respective longitudinal ends.

The plurality of partition walls 11d extend parallel to the side walls 11c and between the side walls 11c paired, and connects inner surfaces of the first main wall 11a and the second main wall 11b to each other. The partition walls 11d partition a space surrounded by the four walls 11a to 11c into a plurality of hollow parts 11e disposed side by side in a width direction. Although the illustrated example shows six partition walls 11d, and seven hollow part 11e larger in number than the partition walls by one, the hollow parts 11e can be appropriately changed in number. Each hollow part 11e has a section in a rectangular shape. Using extrusion molding facilitates manufacturing of a structure having a plurality of closed sections or a plurality of hollow parts 11e as described above. The first heating medium flow path 10 includes the hollow part 11e.

The first header 12 closes an opening of the hollow part 11e on one end side. The second header 13 closes an opening of the hollow part 11e on the other end side. Although the plurality of hollow parts 11e are provided, both the first header 12 and the second header 13 collectively close the openings of the plurality of hollow parts 11e.

The first header 12 includes a lid plate 12a, a peripheral wall 12b erected from a peripheral edge part of the lid plate 12a, and an internal space 12c surrounded by the lid plate 12a and the peripheral wall 12b, and the internal space 12c is open on a side opposite to the lid plate 12a. The internal space 12c has a section (a section of an inner peripheral surface of the peripheral wall 12b) identical in shape (rectangular shape in the present embodiment) to a section of an outer peripheral surface of the heat exchanger body 11. The first header 12 is externally fitted to one end part of the heat exchanger body 11 and is liquid-tightly bonded to the heat exchanger body 11. The lid plate 12a has an inner surface in surface contact with an end surface in a rectangular window-frame shape of one end part of the heat exchanger body 11 while being attached to the heat exchanger body 11. Each of the partition walls 11d has one end part in its longitudinal direction that is displaced inward of the heat exchanger body 11 from the end surface of the one end part of the heat exchanger body 11, the end surface being in surface contact with the lid plate 12a. Thus, each hollow part 11e is open inside the heat exchanger body 11 on one end side. The hollow parts 11e communicate with each other through a communication part 11f extending in the width direction in the heat exchanger body 11 between the opening of the heat exchanger body 11 and the hollow parts 11e.

The same applies to the other end part in the longitudinal direction. The second header 13 includes a lid plate 13a, a peripheral wall 13b, and an internal space 13c as with the first header 12, and is attached to the other end part of the heat exchanger body 11 in the longitudinal direction as with the first header 12.

The inlet 14 is connected to the first supply line 5A (see Fig. 1), and allows the heating medium M to flow into the first heating medium flow path 10. The outlet 15 is connected to the first discharge line 6A (see Fig. 1), and allows the heating medium M to flow out from the first heating medium flow path 10. The inlet 14 and the outlet 15 each have a tubular shape or a nipple shape. Although not illustrated in detail, pipe materials constituting the first supply line 5A and the first discharge line 6A are attached to the inlet 14 and the outlet 15, respectively.

The inlet 14 and the outlet 15 are provided in the first header 12 or the second header 13. In the present embodiment, one inlet 14 is provided in the lid plate 12a of the first header 12, and one outlet 15 is provided in the lid plate 13a of the second header 13. The inlet 14 and the outlet 15 may correspond to the first header 12 and the second header 13 in an opposite manner to the above, and both the inlet 14 and the outlet 15 may be provided in the first header 12 or the second header 13. A plurality of inlets 14 may be provided. A plurality of outlets 15 may be provided.

The heating medium M flows into the communication part 11f on the one end side through the inlet 14, and is further divided into each of the plurality of hollow parts 11e from the communication part 11f on the one end side. The heating medium M merges at the communication part 11f on the other end side from each of the plurality of hollow parts 11e, and further flows out from the communication part 11f on the other end side through the outlet 15.

As described above, the first heating medium flow path 10 includes the communication part 11f on the one end side, the plurality of hollow parts 11e, and the communication part 11f on the other end side. The plurality of hollow parts 11e individually form a plurality of flow paths extending in the longitudinal direction in the first heat exchanger 1 (or the heat exchanger body 11). All the hollow parts 11e constitute the first heating medium flow path 10 in the present embodiment.

The first heat exchanger 1 configured as described above includes the heat exchanger body 11 that is buried underground to form the first heating medium flow path 10 through which the heating medium M flows. The heat exchanger body 11 includes an extruded material made of an aluminum alloy. The aluminum alloy has higher thermal conductivity than a synthetic resin such as polyethylene. As compared with a heat exchanger made of a synthetic resin, heat exchange between the heating medium M and underground heat is accelerated to obtain high heat exchange performance.

The extruded material includes the hollow part 11e, and the first heating medium flow path 10 includes the hollow part 11e. Using extrusion molding facilitates manufacturing of the first heat exchanger 1 long in length. The number of manufacturing steps of the first heat exchanger 1 can be reduced due to a few bonded places, so that construction management can be reduced.

The first heat exchanger 1 further includes the first header 12 that closes the opening of the hollow part 11e on the one end side, the second header 13 that closes the opening of the hollow part 11e on the other end side, the inlet 14 that allows the heating medium M to flow into the first heating medium flow path 10, and the outlet 15 that allows the heating medium M to flow out from the first heating medium flow path 10. The inlet 14 is provided in any one of the first header 12 and the second header 13, and the outlet 15 is provided in any one of the first header 12 and the second header 13. The heat exchanger body 11 is made of the extruded material including the hollow part 11e with both ends opened. The first heating medium flow path 10, which is sealed, is formed by only attaching the two headers of the first header 12 and the second header 13 to respective ends of the heat exchanger body 11, and then a structure for supplying and discharging the heating medium M to and from the first heating medium flow path 10 can be added to the heat exchanger body 11.

An electrolyte may be contained underground below the ground G. Thus, it is conceivable that the first heat exchanger 1 made of metal such as an aluminum alloy causes corrosion to be accelerated. For this reason, the first heat exchanger 1 is provided with a corrosion preventing structure 40 that prevents corrosion of the heat exchanger body 11, as illustrated in Fig. 1. The corrosion preventing structure 40 includes a base metal material 41 and a cable 42.

The base metal material 41 is made of a metal material (i.e., the base material) having a lower natural potential than an aluminum alloy that is a material of the heat exchanger body 11. Examples of such a metal material include zinc and magnesium. The zinc is suitable in light of being relatively inexpensive. Although the base metal material 41 has a rod shape, for example, it may have another shape such as a plate shape. The base metal material 41 is buried underground while being adjacent to the heat exchanger body 11.

The cable 42 electrically and mechanically connects the base metal material 41 to the heat exchanger body 11. The cable 42 is made of a conductive material such as copper. The cable 42 may be covered with an insulating material.

Providing the corrosion preventing structure 40 enables preventing corrosion of the heat exchanger body 11 even when the heat exchanger body 11 is made of an aluminum alloy or an electrolyte is contained in the underground. Specifically, the heat exchanger body 11 is nobler than the base metal material 41, so that galvanic corrosion of the base metal material 41 is accelerated, and corrosion of the heat exchanger body 11 is suppressed. Consequently, the heat exchanger body 11 is improved in service life.

The first header 12 and the second header 13 are each made of metal identical in type to that of the heat exchanger body 11, for example, an aluminum alloy, and are welded to the heat exchanger body 11. The corrosion preventing structure 40 also enables suppressing corrosion of the first header 12 and the second header 13.

The first header 12 and the second header 13 may be made of resin. This configuration prevents the first header 12 and the second header 13 from corroding even when an electrolyte is contained underground. The first header 12 and the second header 13 are each a small component in comparison with the heat exchanger body 11. Thus, even when the first header 12 and the second header 13 are made of resin, heat exchange performance of the first heat exchanger 1 is not affected. The second heat exchanger 2 to be described later includes a header that may also be made of resin, thereby obtaining similar effect.

Figs. 6A and 6B each show an example of a method for installing the first heat exchanger 1 below the ground G. This example shows one first heat exchanger 1 that is buried underground. The first heat exchanger 1 has a longitudinal direction in the horizontal direction. The base metal material 41 is installed above the first heat exchanger 1. The base metal material 41 has the shape of a rod or the shape of an elongated plate, and has a length (dimension in the longitudinal direction) equivalent to that of the first heat exchanger 1.

Figs. 7A and 7B each show another example of the method for installing the first heat exchanger 1 below the ground G. This example shows a plurality of first heat exchangers 1 that are buried underground. Each first heat exchanger 1 has a longitudinal direction in the vertical direction. One base metal material 41 is disposed between two first heat exchangers 1 adjacent to each other, and each of the two first heat exchangers 1 is connected to the base metal material 41 using a corresponding cable 42. The illustrated example shows three first heat exchangers 1 and two base metal materials 41 that are alternately disposed, and that are not particularly limited in number. This example also shows that the base metal material 41 has the shape of a rod or the shape of an elongated plate, and has a length (dimension in the longitudinal direction) equivalent to that of the first heat exchanger 1.

Any of the above two examples enables improvement in service life of a heat exchanger excellent in heat exchange performance. When the plurality of first heat exchangers 1 are disposed side by side, the heat storage tank 3 (see Fig. 1) may be connected in parallel to the plurality of first heat exchangers 1. The plurality of first heat exchangers 1 may be connected in series. The series connection allows the outlet 15 (see Fig. 1) of one first heat exchanger 1 to be connected to the inlet 14 (see Fig. 1) of another first heat exchanger 1, thus allowing the heating medium M to sequentially flow through the plurality of first heat exchangers 1 one by one.

### (Second heat exchanger)

Next, the second heat exchanger 2 will be described with reference to Figs. 8 to 11. The second heat exchanger 2 includes the heat exchanger body 21, a first header 22, a second header 23, an inlet 24, and an outlet 25.

The heat exchanger body 21 includes a sheet metal material made of an aluminum alloy. More specifically, the heat exchanger body 21 includes a plurality of sheet metal materials including a first sheet metal material 31 and a second sheet metal material 32. The first sheet metal material 31 and the second sheet metal material 32 are each in a rectangular shape in plan view. The second sheet metal material 32 is flat.

The first sheet metal material 31 includes a plurality of recesses 31a. The recesses 31a are not particularly limited in number. Each recess 31a is an inner space of a protrusion formed by protruding a part of the first sheet metal material 31 toward a side opposite to the second sheet metal material 32, and is open toward the second sheet metal material 32. Each recess 31a has a groove shape extending in a longitudinal direction of the first sheet metal material 31, and is also open at both edges of the first sheet metal material 31 in the longitudinal direction. The recess 31a or the protrusion is not particularly limited in sectional shape. The recesses 31a extend parallel to each other and are disposed at intervals in the width direction.

The second sheet metal material 32 is stacked on the first sheet metal material 31 while closing the recesses 31a of the first sheet metal material 31, and is bonded to the first sheet metal material 31. The heat exchanger body 21 is formed by this step. Bonding means is not particularly limited. Thermal fusion bonding is preferable because it is simpler than welding and fastening, and sealability is likely to be secured. A thermal fusion film may be interposed between bonded surfaces of the first sheet metal material 31 and the second sheet metal material 32, and an adhesive film of a nonpolar resin may be formed on each of the bonded surfaces of the first sheet metal material 31 and the second sheet metal material 32. The adhesive film is thinner than the thermal fusion film, and thus contributes to reduction in heat resistance of the heat exchanger body 21 and contributes to improvement in heat exchange performance of the second heat exchanger 2.

The heat exchanger body 21 is provided with hollow parts 21a formed by closing the corresponding recesses 31a with the second sheet metal material 32. Each hollow part 21a has a closed section and is open at both ends of the heat exchanger body 21. The plurality of hollow parts 21a are independent of each other. All of the hollow parts 21a constitute the second heating medium flow path 20 in the present embodiment.

The first header 22 closes an opening of each hollow part 21a on one end side. The second header 23 closes an opening of each hollow part 21a on the other end side. Although the plurality of hollow parts 21a are provided, both the first header 22 and the second header 23 collectively close the openings of the plurality of hollow parts 21a.

The first header 22 includes a lid plate 22a, a peripheral wall 22b erected from a peripheral edge part of the lid plate 22a, and an internal space 22c surrounded by the lid plate 22a and the peripheral wall 22b, and the internal space 22c is open on a side opposite to the lid plate 22a. The internal space 22c has a section (a section of an inner peripheral surface of the peripheral wall 22b) identical to a shape (a shape obtained by adding three ridges side by side to a low height rectangle in the present embodiment) to a section of an outer peripheral surface of the heat exchanger body 21. The first header 22 is externally fitted to one end part of the heat exchanger body 21 and is liquid-tightly bonded to the heat exchanger body 21. The lid plate 22a has an inner surface in surface contact with an end surface of one end part of the heat exchanger body 21 while being attached to the heat exchanger body 21. Consequently, the opening of each hollow part 21a on the one end side is sealed.

The same applies to the other end part in the longitudinal direction. The second header 23 includes a lid plate 23a, a peripheral wall 23b, and an internal space 23c as with the first header 22. The second header 23 is attached to the other end part of the heat exchanger body 21 in the longitudinal direction as with the first header 22. Then, the opening of each hollow part 21a on the other end side is sealed. Consequently, the plurality of hollow parts 21a form spaces independent of each other in the second heat exchanger 2.

The inlet 24 is connected to the second supply line 5B, and allows the heating medium M to flow into the second heating medium flow path 20. The outlet 25 is connected to the second discharge line 6B, and allows the heating medium M to flow out from the second heating medium flow path 20. The inlet 24 and the outlet 25 each have a tubular shape or a nipple shape. Although not illustrated in detail, pipe materials constituting the second supply line 5B and the second discharge line 6B are attached to the inlet 24 and the outlet 25, respectively.

The inlet 24 and the outlet 25 are provided in the first header 22 or the second header 23. In the present embodiment, three inlets 24 are provided in the lid plate 22a of the first header 22, and three outlets 25 are provided in the lid plate 23a of the second header 23.

The three inlets 24 include the middle inlet communicating with an opening of one of the hollow parts 21a (second heating medium flow path 20) on the one end side, the one of the hollow parts 21a being located at the middle in the width direction. The three outlets 25 include the middle outlet communicating with an opening of the one of the hollow parts 21a (second heating medium flow path 20) on the other end side. The three inlets 24 include a first inlet located on one side in the width direction, the first inlet communicating with an opening of a first hollow part 21a (second heating medium flow path 20) on the one end side, the first hollow parts 21a being located on the one side in the width direction. The three outlets 25 include a first outlet located on the one side in the width direction, the first outlet communicating with an opening of the first hollow part 21a (second heating medium flow path 20) on the other end side. The three inlets 24 include a second inlet located on the other side in the width direction, the second inlet communicating with an opening of a second hollow part 21a (second heating medium flow path 20) on the one end side, the second hollow part 21a being located on the other side in the width direction. The three outlets 25 include a second outlet located on the other side in the width direction, the second outlet communicating with an opening of the second hollow part 21a (second heating medium flow path 20) on the other end side.

The second supply line 5B has a downstream end that branches near each of the second heat exchangers 2 to be connected to the three inlets 24. The second discharge line 6B has an upstream end that branches near each of the second heat exchangers 2 to be connected to the three outlets 25. The heating medium M flows into each of three second heating medium flow paths 20 from a downstream part of the second supply line 5B through the three inlets 24. The heating medium M flows through each second heating medium flow path 20 in a one-way manner from one side to the other side in the longitudinal direction. The heating medium M flows out from each second heating medium flow path 20 to a downstream part of the second discharge line 6B through the corresponding one of the outlets 25.

The second heat exchanger 2 configured as described above includes the heat exchanger body 21 that is buried underground to form the second heating medium flow path 20 through which the heating medium M flows. The heat exchanger body 21 includes a sheet metal material made of an aluminum alloy. As compared with a heat exchanger made of a synthetic resin, heat exchange between the heating medium M and underground heat is accelerated to obtain high heat exchange performance. Thus, the temperature of the culture medium 91 is likely to be managed as desired, and the growth of the plant 90 is accelerated.

The heat exchanger body 21 includes a plurality of sheet metal materials including the first sheet metal material 31 and the second sheet metal material 32. The first sheet metal material 31 includes the recess 31a, and the second sheet metal material 32 is bonded to the first sheet metal material 31 while closing the recess 31a. The second heating medium flow path 20 is formed by closing the recess 31a with the second sheet metal material 32. Using stacking of sheet metal facilitates manufacturing of the second heat exchanger 2 long in length. The heat exchanger body 21 may include three or more sheet metal materials.

As with the first heat exchanger 1 (see Fig. 2), the second heat exchanger 2 further includes the first header 22 that closes the opening of the hollow part 21a on the one end side, the second header 23 that closes the opening of the hollow part 21a on the other end side, the inlet 24 that allows the heating medium M to flow into the second heating medium flow path 20, and the outlet 25 that allows the heating medium M to flow out from the second heating medium flow path 20. The inlet 24 is provided in any one of the first header 22 and the second header 23, and the outlet 25 is provided in any one of the first header 22 and the second header 23. Operation effect similar to that of the first heat exchanger 1 can be obtained.

The culture medium 91 contains many electrolytes for accelerating the growth of the plant 90. Thus, it is conceivable that the second heat exchanger 2 made of metal such as an aluminum alloy is accelerated to corrode.

The second heat exchanger 2 may also be provided with the corrosion preventing structure 40 including the base metal material 41 and the cable 42. This configuration allows metal ions of the base metal material 41, in which corrosion progresses, to diffuse into the culture medium 91. Some plants 90 require zinc for growth. Thus, the diffusion of the base metal into the culture medium 91 may assist the growth of the plant 90. This configuration also allows the first header 22 and the second header 23 to be made of an aluminum alloy, and enables suppressing corrosion of not only the heat exchanger body 21 but also the first header 22 and the second header 23. Meanwhile, it is also conceivable that heavy metals contained in the aluminum alloy constituting the heat exchanger body 21 are diffused into the culture medium 91. The heavy metals may inhibit healthy growth of the plants 90.

Thus, the second heat exchanger 2 buried in the culture medium 91 may be provided with a film 46 made of resin as an example of the corrosion preventing structure 40. When the thermal fusion bonding of a resin film is applied to bonding between the first sheet metal material 31 and the second sheet metal material 32, the film 46 can be formed on a surface of the heat exchanger body (the surface opposite to a bonding surface of each of the first sheet metal material 31 and the second sheet metal material 32) simultaneously with formation of a film for the bonding. The film 46 as the corrosion preventing structure 40 is formed in a step of manufacturing the second heat exchanger 2, thus facilitating manufacturing of the second heat exchanger 2 to which a corrosion countermeasure is applied.

When the heat exchanger body 21 is only covered with the film 46 made of resin, corrosion does not occur in the heat exchanger body 21 even under an environment where metal corrosion is likely to occur, such as the culture medium 91, and then diffusion of heavy metals can be prevented. For this reason, the first header 22 and the second header 23 may be made of resin, so that no resin film is required to be formed on the first header 22 and the second header 23.

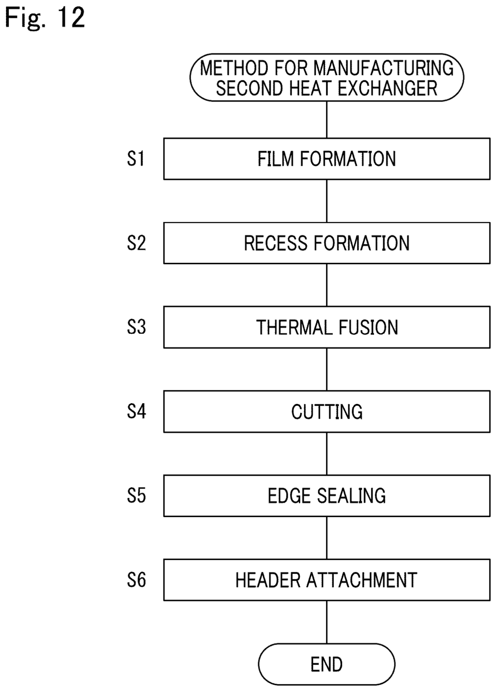

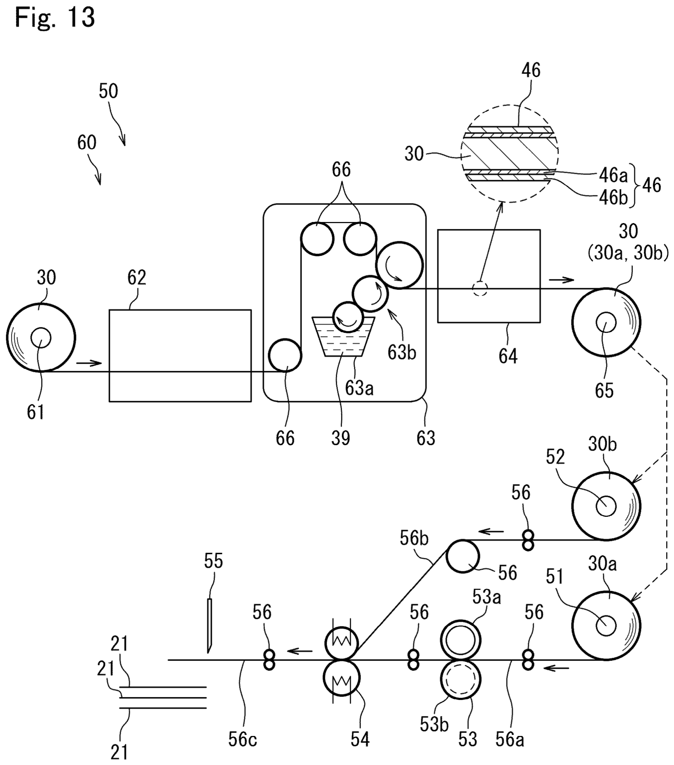

Hereinafter, a method for manufacturing the second heat exchanger 2 including a step of forming the film 46 for preventing corrosion (and a film for bonding) will be described with reference to Figs. 12 and 13.

Fig. 12 illustrates a flowchart of the method for manufacturing the second heat exchanger 2. First, the film 46 is formed on each of both surfaces of a plate material 30 made of an aluminum alloy (see Fig. 13) (step S1). Next, the recesses 31a are formed in the plate material 30 by roll forming (step S2). Subsequently, a first plate material 30a (see Fig. 13) subjected to the roll forming after the film formation and a second plate material 30b (see Fig. 13) subjected to no roll forming after the film formation are bonded to each other by the thermal fusion bonding (step S3). Subsequently, a bonded body is cut into a required size to form the heat exchanger body 21 (step S4). Subsequently, seals 47 made of resin are provided on respective edges of the heat exchanger body 21 in the width direction (step S5). Subsequently, the first header 22 and the second header 23 are bonded to the heat exchanger body 21 (step S6). Consequently, the second heat exchanger 2 is completed.

Fig. 13 illustrates a manufacturing apparatus 50 of the second heat exchanger 2. The manufacturing apparatus 50 includes a film forming apparatus 60 that performs a film forming step (step S1). The film forming apparatus 60 includes an uncoiler 61, a chemical conversion treatment unit 62, a roll coater 63, a drying furnace 64, a recoiler 65, and feed rollers 66. The uncoiler 61 winds out a coil made of the plate material 30 before the film formation. The recoiler 65 winds the plate material 30 after the film formation to reform the coil. The feed rollers 66 form a feed path of the plate material 30, and feed the plate material 30 from the uncoiler 61 to the recoiler 65 along the feed path.

The chemical conversion treatment unit 62 performs a chemical conversion treatment on the plate material 30 fed from the uncoiler 61. Both surfaces of the plate material 30 are each a surface to be treated. The chemical conversion treatment unit 62 cleans the surface to be treated, and performs the chemical conversion treatment on the clean surface to be treated. The chemical conversion treatment may be a chemical conversion type or a coating type, and may be a chromic acid-based film treatment or a non-chromic acid film treatment method. Examples of the chromic acid-based film treatment include chromic acid chromate treatment and phosphoric acid chromate treatment.

The roll coater 63 includes a tank 63a that stores an adhesive, and a transfer roller 63b that applies the adhesive in the tank 63a to the surface to be treated of the plate material 30 subjected to the chemical conversion treatment. The adhesive is made of a nonpolar resin having thermal fusion bonding properties. Examples of the nonpolar resin include polypropylene, polyethylene, polyolefin formed by mixing polypropylene and polyethylene, and acid-modified polyolefin that is especially a preferred example of the nonpolar resin to be a material of an adhesive.

The drying furnace 64 fixes a chemical conversion treatment layer 46a and an adhesive layer 46b to the plate material 30 to which the adhesive is applied, thereby forming the film 46 on the surface to be treated (both surfaces in this example) of the plate material 30. The film 46 has a film thickness of about several µm to several µm. The film 46 has small thermal resistance is small, so that solid heat transfer performance of the heat exchanger body 21, and by extension to heat exchange performance of the second heat exchanger 2, are less likely to deteriorate.

The manufacturing apparatus 50 further includes a first uncoiler 51, a second uncoiler 52, a roll forming machine 53, a fusing machine 54, a cutting machine 55, and feed rollers 56.

The coil recovered by the recoiler 65 is attached to the first uncoiler 51 and the second uncoiler 52. The first uncoiler 51 and the second uncoiler 52 each unwind the coil made of the plate material 30 (30a, 30b) after the film formation. The feed roller 56 forms a feed path of each of the plate materials 30a and 30b. The feed path includes a first path 56a from the first uncoiler 51 to the fusing machine 54 via the roll forming machine 53, a second path 56b from the second uncoiler 52 to the fusing machine 54, and a third path 56c extending from the fusing machine 54 to the cutting machine 55.

The roll forming machine 53 performs a recess formation step (step S2). The roll forming machine 53 includes a roller pair including a flanged roller 53a and a grooved roller 53b. The first plate material 30a fed from the first uncoiler 51 passes between the roller pair. The step allows a recess shape to be transferred to the first plate material 30a by cooperation of a flange and a groove. A plurality of sets of a flange and a groove are disposed side by side in an axial direction of the roller pair, so that a plurality of recess shapes are formed in the first plate material 30a. Each of the recess shapes extends in an extending direction of the first path 56a (feeding direction of the first plate material 30a). This recess shape functions as the recess 31a described above (see Fig. 9).

The fusing machine 54 performs a thermal fusion step (step S3). The fusing machine 54 includes a roller pair including a pair of heating rollers. The first path 56a and the second path 56b each end in a gap between the roller pair. The first plate material 30a fed from the roll forming machine 53 and the second plate material 30b fed from the second uncoiler 52 pass between the roller pair. This step allows the film 46 on the bonding surface of the first plate material 30a and the film 46 on the bonding surface of the second plate material 30b to be heated to bond the first plate material 30a and the second plate material 30b to each other. The recess shape of the first plate material 30a is closed by the second plate material 30b.

The cutting machine 55 performs a cutting step (step S4). The cutting machine 55 cuts the bonded body of the plate materials 30a and 30b fed from the fusing machine 54 into a required size. The heat exchanger body 21 is formed by this step. The first plate material 30a corresponds to the first sheet metal material 31 of the heat exchanger body 21, and the second plate material 30b corresponds to the second sheet metal material 32 of the heat exchanger body 21.

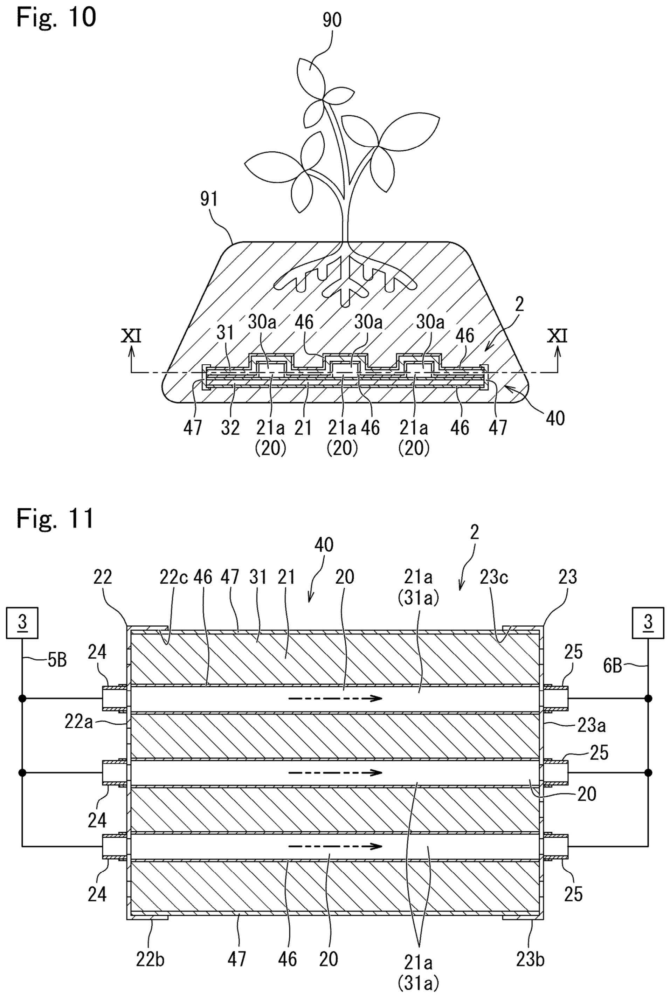

With reference to Fig. 10, the first sheet metal material 31 has a surface opposite to its bonding surface, the surface being entirely covered with the film 46. The second sheet metal material 32 has a surface opposite to its bonding surface, the surface also being entirely covered with the film 46. A sealing step (step S5) is performed to stick films made of a resin such as polyolefin to respective side edge parts of the heat exchanger body 21 as the seals 47. The seals 47 allow the side edges, on which the film 46 is less likely to be formed, to be also covered with the resin material. The corrosion preventing structure 40 including the film 46 and the seals 47 prevents the aluminum alloy, which is the material of the heat exchanger body 21, from being exposed to the culture medium 91, thus improving the heat exchanger body 21 in service life.

The film 46 also remains on an inner surface of the hollow part 21a, the inner surface having no contribution to the thermal fusion bonding. The film 46 protects a surface defining the second heating medium flow path 20. Even when a non-neutral fluid is used for the heating medium M, corrosion of the heat exchanger body 21 can be prevented, and thus a long service life of the second heat exchanger 2 can be maintained.

### (Modification)

Although the embodiment has been described above, change, deletion, or addition can be appropriately applied to the above configuration within the scope of the present disclosure.

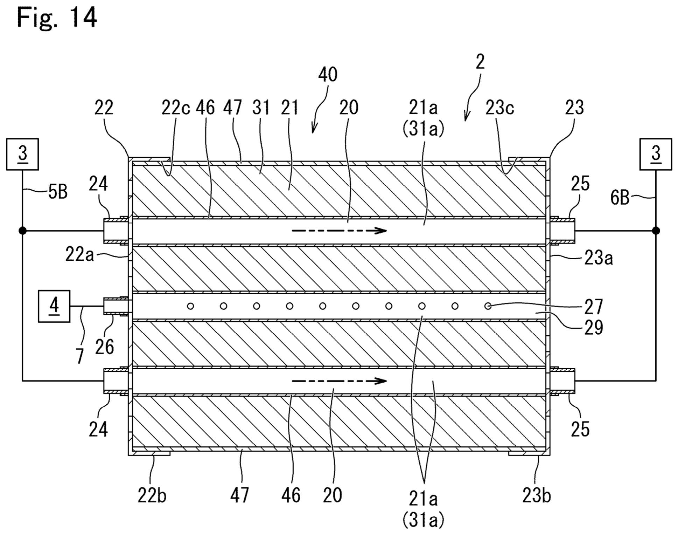

With reference to Fig. 14, the heat exchanger body 21 may form a flow path independently of the second heating medium flow path 20, the flow path being configured to allow a fluid other than the heating medium M to flow therethrough, for example. Examples of the fluid other than the heating medium M include carbon dioxide. For the carbon dioxide, the heat exchange system 100 includes a CO2 tank 4 and a CO2 line 7. The CO2 tank 4 stores the carbon dioxide and is connected to the second heat exchanger 2 using the CO2 line 7. The CO2 line 7 includes a downstream part that may be branched to supply the carbon dioxide to each of the plurality of second heat exchangers 2.

The heat exchanger body 21 includes three hollow parts 21a in which two hollow parts 21a on opposite sides in the width direction constitute the second heating medium flow path 20. One hollow part 21a at the middle in the width direction constitutes a CO2 flow path 29 through which the carbon dioxide flows as a fluid other than the heating medium M. However, placement of the flow paths is not particularly limited.

The first header 22 is provided with a gas inlet 26 that is connected to the CO2 line 7 to allow the carbon dioxide to flow into the CO2 flow path 29. The gas inlet 26 also has a tubular shape or a nipple shape, and a pipe material constituting the CO2 line 7 is attached to the gas inlet 26. The heat exchanger body 21 is provided with a plurality of gas outlets 27. Each gas outlet 27 is a through-hole formed in at least one of the first sheet metal material and the second sheet metal material 32 (the illustrated example shows only an example of the first sheet metal material 31), and allows the CO2 flow path 29 to communicate with the outside of the second heat exchanger 2. The plurality of gas outlets 27 may be disposed side by side at intervals in a longitudinal direction that is an extending direction of the CO2 flow path 29.

The carbon dioxide flows into the CO2 flow path 29 from the downstream part of the CO2 line 7 through the gas inlet 26. The carbon dioxide is guided to the CO2 flow path 29 and can flow from one side to the other side in the longitudinal direction in a central part in the width direction in the heat exchanger body 21. The CO2 flow path 29 is closed at the other end by an inner surface of the lid plate 23a of the second header 23. The carbon dioxide is released from the CO2 flow path 29 through the gas outlet 27 to the outside of the heat exchanger body 21, that is, into the culture medium 91.

Although the first heat exchanger 1 includes the first header 12 provided with one inlet 14, and the second header 13 provided with one outlet 15, a plurality of inlets may correspond to a plurality of first heating medium flow paths 10, and a plurality of outlets may correspond to the plurality of first heating medium flow paths 10. Although the second heat exchanger 2 includes the first header 22 provided with the plurality of inlets 24, and the second header 23 provided with the plurality of outlets 25, the heating medium M flowing into the first header 22 through one inlet may flow separately into the plurality of second heating medium flow paths 20, and the heating medium M merging in the second header 23 may flow out from the second header 23 through one outlet.

The above embodiment shows the heat exchanger including the extruded material and buried under the ground G, which is referred to as the "first heat exchanger 1" for convenience of description, and the heat exchanger including the sheet metal material and buried in the culture medium 91, which is referred to as the "second heat exchanger 2" for convenience of description. Alternatively, the heat exchanger including the extruded material may be buried in the culture medium 91. Then, the heat exchanger including the sheet metal material may be buried under the ground G.

The heat exchanger buried under the ground G may include the heat exchanger body with an outer surface provided with a film made of resin. The heat exchanger buried under the culture medium 91 may include a base metal material that is electrically connected to the heat exchanger body and that is buried in the culture medium 91. Both the film and the base metal material may be applied to one heat exchanger as the corrosion preventing structure 40. Instead of the film made of resin, the heat exchanger body may be packed with a polyethylene bag.

The heat exchanger body may have an outer surface covered with a film other than the film 46 made of resin. This configuration causes the heat exchanger body to be subjected to required surface treatment. The surface treatment is performed to impart corrosion resistance to moisture including an electrolyte such as salt in the soil as with the film 46 made of resin, and the film formed by the surface treatment desirably has properties without impairing thermal conductivity of the heat exchanger as much as possible while having electrical insulation.

For example, when the heat exchanger body is made of an aluminum alloy, the heat exchanger body may have the outer surface coated with an anodized film formed by alumite treatment. Sulfuric acid, oxalic acid, chromic acid, or phosphoric acid can be used for a treatment bath (electrolytic solution). Alternatively, the outer surface of the heat exchanger body may be coated with a film of a thermal spray material sprayed by thermal spraying. Ceramic is a preferred example of the thermal spray material. The heat exchanger body may be provided on the outer surface with a glass layer. For example, liquid glass may be coated on a surface of the aluminum alloy. Examples of the liquid glass include one forming a glass-amorphous silicon oxide film by applying siloxane, silane, or polysilazane to the surface of the aluminum alloy constituting the heat exchanger. Alternatively, the liquid glass may be coated after the anodized film is formed by the alumite treatment. The anodized film obtained by the alumite treatment includes many pores. Thus, the liquid glass is applied to the anodized film to cause the liquid glass to enter the pores in a later step, so that the liquid glass and the anodized film are integrated to suppress decrease in thermal conductivity. Forming the film described above enables preventing corrosion of the heat exchanger body, thus improving the heat exchanger in service life as with the above embodiment.

The heat exchanger buried under the ground G may also be provided with a flow path through which a fluid other than the heating medium flows. The fluid is not limited to carbon dioxide, and may be another liquid or gas.

When the heat exchanger body includes a plurality of hollow parts, the heating medium flow path may be configured in any manner. When the plurality of hollow parts constitute heating medium flow paths independent of each other, the heating medium may flow in a direction in some of the hollow parts, the direction being opposite to a direction in which the heating medium flows in the rest of the hollow parts. The plurality of hollow parts include two hollow parts adjacent to each other that may communicate with each other to cause each heating medium flow path to have one or more folded parts.

The heat exchange system to which the heat exchanger is applied can be used in applications other than agricultural applications.

This disclosure may involve the following aspects.

### (Aspect 1)

A heat exchanger comprising:
a heat exchanger body buried underground to form a heating medium flow path through which a heating medium flows,
the heat exchanger body formed from an extruded material or a sheet metal material made of an aluminum alloy.

### (Aspect 2)

The heat exchanger according to Aspect 1, wherein
the heat exchanger body is formed from the extruded material, and
the heating medium flow path includes a hollow part of the extruded material.

### (Aspect 3)

The heat exchanger according to Aspect 1, wherein
the heat exchanger body is formed from a plurality of sheet metal materials including a first sheet metal material and a second sheet metal material,
the first sheet metal material includes a recess, and the second sheet metal material is stacked on and bonded to the first sheet metal material while closing the recess, and
the heating medium flow path includes a hollow part formed by closing the recess with the second sheet metal material.

### (Aspect 4)

The heat exchanger according to Aspect 2 or 3, further comprising:
a first header that closes an opening of the hollow part on one end side; and
a second header that closes an opening of the hollow part on another end side.

### (Aspect 5)

The heat exchanger according to Aspect 4, further comprising:
an inlet through which the heating medium flows into the heating medium flow path; and
an outlet through which the heating medium flows out from the heating medium flow path,
wherein the inlet is provided in any one of the first header and the second header, and the outlet is provided in any one of the first header and the second header.

### (Aspect 6)

The heat exchanger according to any one of Aspects 1 to 5, wherein
the heat exchanger body forms a flow path independently of the heating medium flow path, the flow path allowing a fluid other than the heating medium to flow through the flow path.

### (Aspect 7)

The heat exchanger according to any one of Aspects 1 to 6, wherein
the heat exchanger body is buried under a ground or in a culture medium in which a plant is cultivated.

### (Aspect 8)

The heat exchanger according to any one of Aspects 1 to 7, further comprising:
a corrosion preventing structure that prevents corrosion of the heat exchanger body.

### (Aspect 9)

The heat exchanger according to Aspect 8, wherein
the corrosion preventing structure includes a base metal material buried underground together with the heat exchanger body and made of a metal material with an electric potential lower than that of the aluminum alloy, and a cable electrically connecting the heat exchanger body to the base metal material.

### (Aspect 10)

The heat exchanger according to Aspect 8, wherein
the corrosion preventing structure includes a resin film coated on an outer surface of the heat exchanger body.

### (Aspect 11)

The heat exchanger according to Aspect 8, wherein
the corrosion preventing structure includes an alumite film or a glass layer provided on the outer surface of the heat exchanger body.

### (Aspect 12)

The heat exchanger according to any one of Aspects 8 to 12, further comprising:
a header made of a resin material and provided at an end of the heat exchanger body.

This application claims priority based on Japanese Patent Application No. 2023-036693 filed on March 9, 2023 and Japanese Patent Application No. 2023-119928 filed on July 24, 2023, the contents of which are incorporated herein by reference.

### REFERENCE SIGNS LIST

- 1: first heat exchanger
- 2: second heat exchanger
- 10: first heating medium flow path
- 11: heat exchanger body
- 11e: hollow part
- 12: first header
- 13: second header
- 14: inlet
- 15: outlet
- 20: second heating medium flow path
- 21: heat exchanger body
- 21a: hollow part
- 22: first header
- 23: second header
- 24: inlet
- 25: outlet
- 29: CO2 flow path
- 31: first sheet metal material
- 31a: recess
- 32: second sheet metal material
- 40: corrosion preventing structure
- 41: base metal material
- 42: cable
- 46: film
- 90: plant
- 91: culture medium
- 100: heat exchange system
- G: ground
- M: heating medium

## Claims

1. A heat exchanger comprising:
a heat exchanger body buried underground to form a heating medium flow path through which a heating medium flows,
the heat exchanger body formed from an extruded material or a sheet metal material made of an aluminum alloy.

2. The heat exchanger according to claim 1, wherein
the heat exchanger body is formed from the extruded material, and
the heating medium flow path includes a hollow part of the extruded material.

3. The heat exchanger according to claim 1, wherein
the heat exchanger body is formed from a plurality of sheet metal materials including a first sheet metal material and a second sheet metal material,
the first sheet metal material includes a recess, and the second sheet metal material is stacked on and bonded to the first sheet metal material while closing the recess, and
the heating medium flow path includes a hollow part formed by closing the recess with the second sheet metal material.

4. The heat exchanger according to claim 2 or 3, further comprising:
a first header that closes an opening of the hollow part on one end side; and
a second header that closes an opening of the hollow part on another end side.

5. The heat exchanger according to claim 4, further comprising:
an inlet through which the heating medium flows into the heating medium flow path; and
an outlet through which the heating medium flows out from the heating medium flow path,
wherein the inlet is provided in any one of the first header and the second header, and the outlet is provided in any one of the first header and the second header.

6. The heat exchanger according to any one of claims 1 to 3, wherein
the heat exchanger body forms a flow path independently of the heating medium flow path, the flow path allowing a fluid other than the heating medium to flow through the flow path.

7. The heat exchanger according to any one of claims 1 to 3, wherein
the heat exchanger body is buried under a ground or in a culture medium in which a plant is cultivated.

8. The heat exchanger according to any one of claims 1 to 3, further comprising:
a corrosion preventing structure that prevents corrosion of the heat exchanger body.

9. The heat exchanger according to claim 8, wherein
the corrosion preventing structure includes a base metal material buried underground together with the heat exchanger body and made of a metal material with an electric potential lower than that of the aluminum alloy, and a cable electrically connecting the heat exchanger body to the base metal material.

10. The heat exchanger according to claim 8, wherein
the corrosion preventing structure includes a resin film coated on an outer surface of the heat exchanger body.

11. The heat exchanger according to claim 8, wherein
the corrosion preventing structure includes an alumite film or a glass layer provided on the outer surface of the heat exchanger body.

12. The heat exchanger according to claim 8, further comprising:
a header made of a resin material and provided at an end of the heat exchanger body.
